# EUROPÄISCHE PATENTSCHRIFT

(11) **EP 0 650 751 B1**
(45) Veröffentlichungstag und Bekanntmachung des Hinweises auf die Patenterteilung: **18.06.2003**
(21) Anmeldenummer: 94116606.8
(22) Anmeldetag: 21.10.1994
(51) Int. Cl.: B01D 29/11, B01D 46/24

(54) **Filtereinrichtung**
Filter apparatus
Appareil pour filtrer

(30) Priorität: 27.10.1993 DE 4336638; 07.04.1994 DE 4411968; 09.08.1994 DE 4428139
(43) Veröffentlichungstag der Anmeldung: 03.05.1995
(73) Patentinhaber: FILTERWERK MANN + HUMMEL GMBH, 71638 Ludwigsburg (DE)
(72) Erfinder: Dürrstein, Rolf, Dr., D-74321 Bietigheim (DE); Erdmannsdörfer, Hans, D-75335 Dobel (DE); Sommer, Bruno, D-71631 Ludwigsburg (DE); Storz, Helmutz, D-71726 Benningen (DE)
(74) Vertreter: Voth, Gerhard, Dipl.-Ing.

(56) Entgegenhaltungen:
- EP-A- 0 559 011
- DE-B- 1 062 675
- DE-B- 1 094 206
- GB-A- 2 163 368

## Beschreibung

### Stand der Technik

Die Erfindung betrifft eine Filtereinrichtung nach dem Oberbegriff des Hauptanspruchs.

Aus der DE 42 06 519 ist eine Filtereinrichtung mit einem Ringfilterelement bekannt. Dieses Ringfilterelement besteht aus einem zick-zack-förmig gefalteten Filtermaterial. An den Stirnseiten sind jeweils durch Verbindungen mit dem Filtermaterial dicht abdeckende Platten oder folienförmige Dichtmaterialien angeordnet. Das Dichtmaterial ist in Form einer Radialdichtung gestaltet, das heißt, es überragt das Filtermaterial radial innen um einen bestimmten Betrag und bildet mit einem Gehäusestutzen das Dichtelement.

Solche Radialdichtungen werden sehr hohen Reiß-Spannungen ausgesetzt. Es besteht die Gefahr, daß das Dichtmaterial beim Einsetzen des Filterelements in das Filtergehäuse reißt und damit nicht nur das Dichtmaterial beschädigt, sondern die Filterwirkung völlig außer Kraft gesetzt wird.

Die Veröffentlichung versucht zwar, mit einem Stützring ein definiertes Radialdichtungsmaß einzustellen. Dieser Stützring muß jedoch, wenn er eine Wirkung erzeugen soll, relativ dickwandig sein und verringert damit den Innendurchmesser des Gehäusestutzens erheblich.

Es ist aus der DE-OS 24 29 474 weiterhin ein Filterelement bekannt, bei dem eine Radialdichtung mittels Dichtlippen gebildet wird, wobei die Radialdichtung ebenfalls in die Stirnseitenabdichtung integriert ist.

Ein Nachteil dieser Dichtlippen ist darin zu sehen, daß diese sehr wulstig ausgestaltet sind. Die Dichtlippen verringern damit den Durchmesser des Gehäusestutzens erheblich bzw. vergrößern den Außendurchmesser des Filterelements.

Die EP 0 559 011 beschreibt ein Ringfilterelement mit einem an den Stirnseiten angeordneten platten- oder folienförmigen Dichtmaterial. Das Dichtmaterial steht in Richtung eines Filtergehäuses über und verformt sich beim Einführen in das Gehäuse derart, dass es nach innen umklappt und sich in diesem verformten Zustand an den Gehäusestutzen anlegt.

Der Erfindung liegt daher die Aufgabe zugrunde, eine Filtereinrichtung zu schaffen, die eine optimale Ausnutzung des vorhandenen Raums gewährleistet und die ein Beschädigen der Stirnseitenabdeckung, welche die Radialabdichtung bildet verhindert. Die Erfindung kann selbstverständlich sowohl bei Flüssigkeitsfiltern als auch bei Luftfiltern angewendet werden.

Diese Aufgabe wird ausgehend von dem Oberbegriff des Hauptanspruchs durch dessen kennzeichnende Merkmale gelöst.

Der wesentliche Vorteil der Erfindung ist darin zu sehen, daß ein flexibler Vliesring vorgesehen ist, der die Dichtwirkung der Radialdichtung nicht beeinflußt, keinen zusätzlichen Bauraum erfordert und ein Einreißen der Stimendscheibe wirksam verhindert.

Nach der Erfindung ist vorgesehen, den Vliesring in die elastisch ausgebildete Endschei-be einzubetten. Damit wird eine besonders innige Verbindung zwischen Endscheibe und Vliesring geschaffen.

Der Vliesring hat die Eigenschaft, daß er die Elastizität der Radialdichtung nicht beeinflußt bzw. die Radialdichtungswirkung noch unterstützt.

Die Radialdichtung für das Filterelement kann an der Innenbohrung der Stirnendscheibe oder an der Umfangsfläche der Stirnendscheibe vorgesehen sein. In beiden Fällen ist der Vliesring in unmittelbarer Nähe der Radialdichtung angeordnet.

Ausführungsbeispiele der Erfindung sind in den Zeichnungen dargestellt und werden im folgenden näher erläutert. Die Zeichnungen zeigen:
- Figur 1 und Figur 2: das Filterelement einer Filtereinrichtung mit jeweils einem flexiblen Stützring,
- Figur 3: ein auf ein Mittelrohr aufgeschobenes Filterelement in einer Schnittdarstellung.

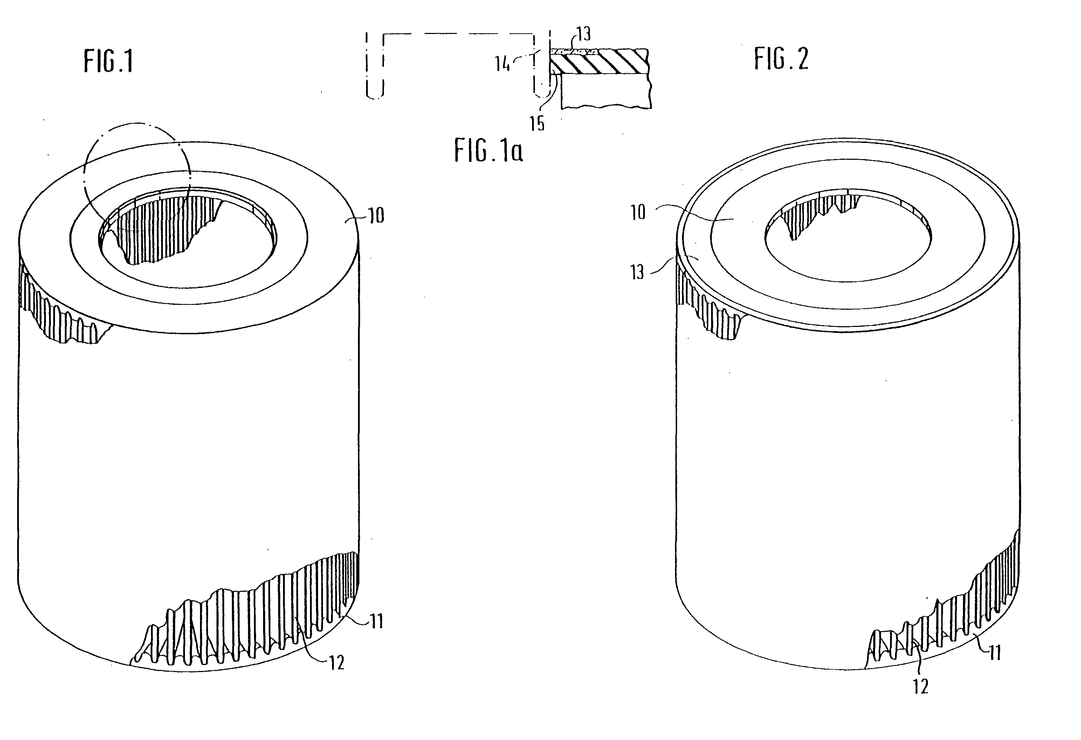

Die Filterelemente gemäß Figur 1 und Figur 2 bestehen im wesentlichen aus elastischen Stirnendscheiben 10 und 11, zwischen denen ein zick-zack-förmig gefaltetes Filterpapier 12 angeordnet ist. Zur einfacheren Darstellung sind in den Figuren die jeweiligen Gehäuse der Filtereinrichtungen mit Rohölzulauf und Reinölablauf sowie das Mittelrohr, durch welches der Reinölablauf erfolgt, nicht dargestellt. Solche Gehäuse sind jedoch allgemein bekannt und zum Beispiel aus dem deutschen Gebrauchsmuster 18 51 221 ersichtlich.

Die Filterelemente können auch zum Filtern von Luft, beispielsweise von Filtern von An-saugluft für eine Verbrennungskraftmaschine oder zum Filtem von Luft für den Innenraum eines Kraftfahrzeuges verwendet werden. Dabei ist das jeweilige Filterelement in einem Luftfiltergehäuse angeordnet. Der Rohluftzutritt erfolgt außen, das heißt das Filterelement wird von außen nach innen durchströmt. Der Reinluftbereich befindet sich im Inneren. Die Reinluft kann über ein konzentrisch angeordnetes Mittelrohr entnommen werden.

An der Stimendscheibe ist gemäß Figur 1a ein flexibler Stützring 13 angeordnet. Dieser flexible Stützring ist in die Stirnendscheibe eingebettet und besteht aus einem Vlies. Die radiale Abdichtung des Filterelements gegenüber dem gestrichelt gezeichneten Mittelrohr 14 erfolgt im inneren Bereich 15 der Stirnendscheibe 10. Der Stützring/Vliesring 13 verhindert wirksam eine Beschädigung der Radialdichtung, ist aber andererseits flexibel ge-nug, um eine zuverlässige Radialabdichtung zu gewährleisten.

In Figur 2 ist ein Filterelement gezeigt, welches an seinem äußeren Umfang radial abgedichtet wird. Der Stützring 13 ist deshalb am äußeren Rand in die Stirnendscheibe 10 eingebettet und weist die gleiche Funktion wie in Figur 1 auf.

Wesentlicher Vorteil von elastischen Stirnendscheiben mit flexiblen Stützringen ist auch der hohe Temperaturbereich. Solche Filterelemente können in bis zu 150°C heißem Motoröl Anwendung finden. Außerdem ist die Anwendung bei Kraftstoff-Filtern möglich. Die Funtkionstüchtigkeit der Abdichtung ist unter allen Einsatzbedingungen gegeben. Dies bedeutet, daß die Flexibilität der Abdichtelemente auch unter härtesten Einsatzbedingungen nicht verloren geht.

Die flexible Ausgestaltung der Stirnendscheiben ermöglicht auch den Einsatz von Mittelrohren aus Kunststoffmaterial. Fertigungstoleranzen können durch diese flexible Ausgestaltung problemlos ausgeglichen werden.

Durch das Fehlen zusätzlicher Dichtungselemente kann das vorhandene Bauvolumen optimal für das filterwirksame Medium ausgenutzt werden. Auch entfallen zusätzliche Blech- oder Papierendscheiben.

Weitere Vorteile sind die Entsorgungsfreundlichkeit, das geringe Gewicht sowie die Korrosionsbeständigkeit.

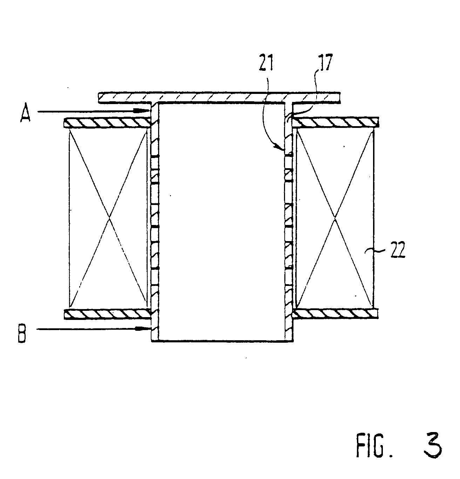

In Figur 3 ist eine Patrone gezeigt, die in besonders einfacher Weise von dem Mittelrohr entfernt werden kann. Das Mittelrohr 17 weist im Bereich A seinen größten Durchmesser auf und verjüngt sich aufgrund einer Stufe 21 bis auf den Durchmesser im Bereich B. In der Darstellung ist die Verjüngung überproportional gezeichnet. In der Praxis hat sich eine Verjüngung um etwa 0,3 mm bis 2 mm als günstig erwiesen. Selbstverständlich kann das Mittelrohr auch kegelstumpfförmig verlaufen. Das Filterelement 22 ist zylinderförmig gestaltet, das heißt, die beiden Endscheiben des Filterelements 22 weisen gleiche Innendurchmesser auf. Wird das Filterelement 22 auf das Mittelrohr 17 aufgeschoben, so weitet sich die in Montagerichtung gesehene vordere Endscheibe etwas weiter auf. Aufgrund der Flexibilität der Endscheibe paßt sich das Filterelement mühelos dem Mittelrohr an.

Der wesentliche Vorteil des abgestuften Mittelrohrs liegt darin, dass die Patrone durch leichten Stoß auf das Mittelrohr und ohne Anfassen mit der Hand vom Mittelrohr entnommen werden kann. Ein Austausch der Patrone ist somit ohne besondere Werkzeuge und ohne Verschmutzung möglich.

## Patentansprüche

1. Filtereinrichtung
- mit einem Gehäuse
- einem mit dem Gehäuse verbundenen Mittelrohr (14, 17),
- einer Öffnung für das zu filternde Medium und einer Öffnung für das gereinigte Medium, wobei die Entnahme des gereinigten Mediums durch ein Mittelrohr (14, 17) erfolgt,
- mit einer metallfreien Filterpatrone, die ein konzentrisch angeordnetes, zick-zack-förmig gefaltetes Filterelement (10, 11, 12) aufweist,
wobei das Filterelement an den Stirnseiten mit Stirnendscheiben (10, 11) versehen ist und wobei wenigstens eine Stirnendscheibe elastisch ausgebildet ist, wobei die elastische Stirnendscheibe (10, 11) eine Radialdichtung bildet, und durch gekennzeichnet, daß an der elastischen Stirnendscheibe im unmittelbaren Bereich der Radialdichtung ein flexibler, Vliesring (13) in die elastisch ausgebildete Stirnendscheibe eingebettet ist, welcher die Radialdichtungswirkung unferstützt.

2. Filtereinrichtung nach Anspruch 1, **dadurch gekennzeichnet, daß** die Radialabdichtung an der Innenbohrung der Stirnendscheibe liegt.

3. Filtereinrichtung nach Anspruch 1, **dadurch gekennzeichnet, daß** die Radialdichtung an der Umfangsfläche der elastischen Stirnendscheibe (10, 11) vorgesehen ist und der Stützring (13) in unmittelbarer Nähe dieser Umfangsfläche angeordnet ist.

4. Filtereinrichtung nach Anspruch 1, **dadurch gekennzeichnet, daß** die Dicke des Vliesrings im Verhältnis zur Dicke der elastischen Endscheibe 1 : 4 beträgt.

5. Filtereinrichtung nach einem der vorherigen Ansprüche, **dadurch gekennzeichnet, daß** der flexible Vliesring (13) sich bis in den Radialdichtungsbereich erstreckt.

6. Filtereinrichtung nach einem der vorherigen Ansprüche, **dadurch gekennzeichnet, daß** das Mittelrohr (17) wenigstens zwei geringfügig unterschiedliche Durchmesser aufweist.

7. Filtereinrichtung nach Anspruch 6, **dadurch gekennzeichnet, daß** sich der größere Durchmesser des Mittelrohrs (17) an dem in Einschubrichtung der Patrone vorderen Ende befindet.

8. Filtereinrichtung nach Anspruch 7, **dadurch gekennzeichnet, daß** das Filterelement an seinen Stirnseiten mit Stirnendscheiben (10, 11) versehen ist, welche gleiche Dichtflächendurchmesser aufweisen.

9. Filterpatrone, insbesondere für eine Filtereinrichtung nach Anspruch 1, welche ein konzentrisch angeordnetes, zick-zack-förmig gefaltetes Filterelement ausweist, wobei das Filterelement an den Stirnseiten mit Stirnendscheiben (10, 11) versehen ist und wobei wenigstens eine Stirnendscheibe elastisch ausgebildet ist wobei die elastische Stirnendscheibe (10, 11) eine Radialdichtung bildet, **dadurch gekennzeichnet, daß** an der elastischen Stirnendscheibe im unmittelbaren Bereich die Radialdichtung ein flexibler Vliesring (13) in die elastisch ausgebildete Stirnendscheibe eingebettet ist, welcher die Radialdichtungs wirkung unterstützt.

## Claims

1. Filter apparatus, having
- a housing,
- a central tube (14, 17) connected to the housing,
- an opening for the medium to be filtered, and an opening for the filtered medium,
the removal of the filtered medium being effected through a central tube (14, 17),
- a metal-free filter cartridge, which has a concentrically disposed, zig-zag-folded filter element (10, 11, 12),
the filter element being provided, on the end faces, with end discs (10, 11), and at least one end disc being resilient, and the resilient end disc (10, 11) forming a radial seal,
**characterised in that**, on the resilient end disc in the immediate region of the radial seal, a flexible web ring (13) is embedded in the resilient end disc, which ring assists the action of the radial seal.

2. Filter apparatus according to claim 1, **characterised in that** the radial seal lies on the internal bore of the end disc.

3. Filter apparatus according to claim 1, **characterised in that** the radial seal is provided on the circumferential face of the resilient end disc (10, 11), and the support ring (13) is disposed in the immediate vicinity of this circumferential face.

4. Filter apparatus according to claim 1, **characterised in that** the ratio between the thickness of the web ring and the thickness of the resilient end disc is 1 : 4.

5. Filter apparatus according to one of the previous claims, **characterised in that** the flexible web ring (13) extends as far as and into the region of the radial seal.

6. Filter apparatus according to one of the previous claims, **characterised in that** the central tube (17) has at least two slightly different diameters.

7. Filter apparatus according to claim 6, **characterised in that** the larger diameter of the central tube (17) is situated at the front end when viewed with respect to the direction of insertion of the cartridge.

8. Filter apparatus according to claim 7, **characterised in that** the filter element is provided, on its end faces, with end discs (10, 11) which have identical sealing face diameters.

9. Filter cartridge, more especially for a filter apparatus according to claim 1, which has a concentrically disposed, zig-zag-folded filter element, the filter element being provided, on the end faces, with end discs (10, 11), and at least one end disc being resilient, and the resilient end disc (10, 11) forming a radial seal, **characterised in that**, on the resilient end disc in the immediate region of the radial seal, a flexible web ring (13) is embedded in the resilient end disc, which ring assists the action of the radial seal.

## Revendications

1. Filtre comprenant
- un boîtier
- un tube central (14, 17) relié au boîtier,
- une ouverture pour le fluide à filtrer et une ouverture pour le fluide filtré, l'extraction du fluide filtré se faisant par le tube central (14, 17),
- une cartouche de filtre sans métal, installée de manière concentrique, et ayant un élément de filtre (10, 11, 12) plié en zigzag, installé de manière concentrique,
l'élément de filtre étant muni de disques d'extrémité frontale (10, 11) au niveau des faces frontales, avec
au moins un disque d'extrémité de filtre étant élastique, le disque d'extrémité frontale élastique (10, 11) formant un joint radial,
**caractérisé en ce qu'**
un anneau non tissé (13), souple, est logé au niveau du disque d'extrémité frontale élastique, directement dans la zone du joint radial, dans le disque d'extrémité frontale formé élastiquement, et renforce l'effet d'étanchéité radiale.

2. Filtre selon la revendication 1,
**caractérisé en ce que**
le joint radial est appliqué contre le perçage intérieur du disque de l'extrémité frontale.

3. Filtre selon la revendication 1,
**caractérisé en ce que**
le joint radial est prévu contre la surface périphérique du disque d'extrémité frontale élastique (10, 11) et l'anneau de support (13) se trouve au voisinage immédiat de cette surface périphérique.

4. Filtre selon la revendication 1,
**caractérisé en ce que**
l'épaisseur de l'anneau de non-tissé par rapport à celle du disque d'extrémité élastique est de 1/4.

5. Filtre selon l'une quelconque des revendications précédentes,
**caractérisé en ce que**
l'anneau de non-tissé souple (13) s'étend jusqu'au niveau de la zone d'étanchéité radiale.

6. Filtre selon l'une quelconque des revendications précédentes,
**caractérisé en ce que**
le tube central (17) présente au moins deux diamètres légèrement différents.

7. Filtre selon la revendication 6,
**caractérisé en ce que**
le plus grand diamètre du tube central (17) se trouve à l'extrémité avant de la cartouche dans le sens de l'engagement.

8. Filtre selon la revendication 7,
**caractérisé en ce que**
l'élément de filtre est muni, au niveau de ses faces frontales, de disques d'extrémité (10, 11) qui ont le même diamètre pour la surface d'étanchéité.

9. Cartouche de filtre, notamment pour un filtre selon la revendication 1, comportant un élément de filtre replié en zigzag, installé de manière concentrique, l'élément de filtre étant muni disques d'extrémité (10, 11) au niveau des faces frontales et au moins un disque d'extrémité formé élastiquement,
le disque d'extrémité élastique (10, 11) constituant un joint radial,
**caractérisée en ce qu'**
au niveau du disque d'extrémité frontale élastique, directement au niveau du joint radial, un anneau de non-tissé (13), souple, est logé dans le disque d'extrémité élastique, et renforce l'effet d'étanchéité radiale.
